Europäisches Patentamt

European Patent Office

Office européen des brevets

(11) Veröffentlichungsnummer: **0 264 580**
**A1**

## (12) EUROPÄISCHE PATENTANMELDUNG

(21) Anmeldenummer: **87112301.4**

(22) Anmeldetag: **25.08.87**

(51) Int. Cl.⁴: **B01D 53/34**

(30) Priorität: **11.09.86 DE 3630940**

(43) Veröffentlichungstag der Anmeldung:
**27.04.88 Patentblatt 88/17**

(84) Benannte Vertragsstaaten:
**AT BE CH DE ES FR LI NL**

(71) Anmelder: **Energie Systemplanung INSUMMA GmbH**
**Bärenschanzstrasse 8 D**
**D-8500 Nürnberg(DE)**

(72) Erfinder: **Erdlen, Erwin**
**Am Judenhof 9**
**D-8568 Simmelsdorf-Utzmannsbach(DE)**
Erfinder: **Klein, Michael**
**Elsa-Brandström-Strasse 78**
**D-8500 Nürnberg(DE)**

(74) Vertreter: **Czowalla . Matschkur Patentanwälte**
**Dr.-Kurt-Schumacher-Strasse 23 Postfach 9109**
**D-8500 Nürnberg 11(DE)**

(54) Verfahren und Vorrichtung zum Entschwefeln von Rauchgas.

(57) Verfahren und Vorrichtung zum Reinigen von - schwefeldioxidhaltigem Rauchgas durch Absorption in Wasser, wobei das wasserdampfhaltige Rauchgas in einem Konverter unter den Taupunkt abgekühlt und das mit dem Wasserdampf ausgefällte im Wasser gelöste Schwefeldioxid als schweflige Säure ausgetragen wird, wobei ein Teilstrom der ausgetragenen schwefligen Säure in einem Austreiber entgast und das $SO_2$ abgezogen und gesammelt wird und der Teilstrom nach der Entgasung gekühlt und den Hauptstrom beigemischt wird, der anschließend als Kühlflüssigkeit in den Konverter zurückgeführt und über einem vom Rauchgas durchsetzten Filterbett versprüht wird.

EP 0 264 580 A1

## Verfahren und Vorrichtung zum Entschwefeln von Rauchgas

Die Erfindung bezieht sich auf ein Verfahren zum Reinigen von schwefeldioxidhaltigem Rauchgas durch Absorption in Wasser, wobei das wasserdampfhaltige Rauchgas in einem Konverter unter den Taupunkt abgekühlt und das mit dem Wasserdampf ausgefällte im Wasser gelöste Schwefeldioxid als schweflige Säure (bzw. einem Gemisch von schwefliger Säure und Schwefelsäure) ausgetragen wird, sowie eine Vorrichtung zum Durchführen dieses Verfahrens.

Bei einem aus der DE-OS 1 594 670 bekanntgewordenen Verfahren der eingangs beschriebenen Art wird dem Rauchgas zunächst Wasserdampf zugeführt und anschließend in einem als Wärmeaustauscher ausgebildeten Konverter abgekühlt und die anfallende schweflige Säure, bzw. das Gemisch aus schwefliger Säure und Schwefelsäure, abgezogen, wobei bevorzugt diese Säure mit Soda vermischt werden soll, um unter Salzbildung ein Wiederaustreiben des $SO_2$ zu verhindern. In diesem Fall fällt sehr viel Säure bzw. Salz an, welches dann wieder vom Wasser getrennt werden muß, wobei die Verwendung einer derartigen Säure in den anfallenden großen Mengen erhebliche Schwierigkeiten bereitet, ganz davon abgesehen, daß ein hoher Wasserverbrauch zu verzeichnen ist.

Darüber hinaus ist in der DE-OS 2 231 938 auch bereits ein Verfahren zur Gewinnung von Schwefel aus Abgasen vorgeschlagen worden, bei welchem das Schwefeldioxid durch einen Waschvorgang mit Kühlwasser aus dem sehr stark abgekühlten Gas herausgewaschen wird, wobei dieses Kühlwasser mit dem darin enthaltenen Schwefeldioxid in einem Rücklaufverfahren immer wieder durch die Waschstufe geleitet wird, bis es eine Konzentration knapp unterhalb der maximalen Löslichkeit an $SO_2$ angenommen hat. Danach wird es dann aus dem Kreislauf entfernt und das Schwefeldioxid in der konzentrierten Säure als wasserunlösliches Sulfit ausgefällt. Dieses Verfahren hat den Nachteil, daß -neben der erforderlichen hohen Kühlleistung zum Herunterkühlen des Rauchgases auf Temperaturen von nur ca. 4 bis 16°C - dabei ein Sulfit anfällt, das in vielen Fällen nicht weiterverwendet werden kann, so daß dann erhebliche Probleme mit der Lagerung des anfallenden Sulfits entstehen. Dies ist ja auch eine der Gründe, warum die sog. Naßentschwefelung von Kraftwerken derzeit so große Probleme bereitet, da die anfallenden Gipsmengen keiner sinnvollen Weiterverwendung zugeführt werden können und somit endgelagert werden müssen.

Der Erfindung liegt daher die Aufgabe zugrunde, ein Verfahren der eingangs beschriebenen Art so auszugestalten, daß mit möglichst geringem Energiebedarf und mit einem praktisch vollständig geschlossenem Wasserkreislauf, d.h. ohne nennenswerten Wasserverbrauch, eine Entschwefelung von Rauchgas möglich ist, ohne daß dabei - schwefelhaltige Abfallstoffe anfallen, die nicht oder nur unter Schwierigkeiten weiterverwendet werden können.

Zur Lösung dieser Aufgabe ist erfindungsgemäß vorgesehen, daß nur ein Teilstrom der ausgetragenen schwefligen Säure in einem Austreiber entgast und das Schwefeldioxid abgezogen and gesammelt wird und daß der Teilstrom nach der Entgasung ge kühlt und dem Hauptstrom beigemischt wird, der anschließend als Kühlflüssigkeit in den Konverter zurückgeführt und über einem vom Rauchgas durchsetzten Filterbett versprüht wird.

Erfindungsgemäß ist zunächst der Kühlkreislauf zum Herunterkühlen des $SO_2$ sowie Wasserdampf enthaltenden Rauchgasgemisches nicht von diesem Gemisch getrennt, wie bei der DE-OS 1 594 670, sondern das Herunterkühlen erfolgt in einem Konverter mit einem Filterbett, welches vom Rauchgas durchströmt wird, wobei im Gegenstrom das Kühlwasser eingesprüht wird. Von dem am unteren Ende des Konverters abgezogenen sauren Kühlwasser, d.h. einer recht verdünnten Lösung von schwefliger Säure und Schwefelsäure, wird nur ein Teilstrom abgezogen, der so gewählt ist, daß ihm gerade eine solche Menge an $SO_2$ entzogen wird, wie sie bei einem Durchlauf des Wassers in der entsprechenden Zeiteinheit aus dem Rauchgas ausgefällt worden ist. Dieser Teilstrom wird nach dem Austreiben des $SO_2$, welches bevorzugt abgekühlt und verflüssigt als reines flüssiges Schwefeldioxid zur Weiterverarbeitung bereitgestellt werden kann, dem Hauptstrom wieder beigemischt, so daß nach einer Abkühlung in einem Kühler dem Konverter stets eine Kühlflüssigkeit in Form eines sauren Wassers bzw. einer sehr verdünnten Säure (ca. 2-bis 3-prozentig) wieder zugeführt wird.

Das erfindungsgemäße Verfahren hat den Vorteil, daß in einem praktisch völlig geschlossenen Kreislauf ohne nennenswerten Wasserverbrauch- von geringen unvermeidlichen Verlusten abgesehen -$SO_2$ in Reinform gewonnen wird, welches als wertvoller Rohstoff für die chemische Industrie - im Gegensatz zu Gips oder anderen ausgefällten Schwefelsalzen - problemlos abgesetzt werden kann.

Um nicht zu große Kühlwassermengen im Konverter umsetzen zu müssen, um eine Taupunktsunterschreitung und damit ein gemeinsames Ausfällen des Wasserdampfs mit dem $SO_2$ in nahezu stöchiometrischem Verhältnis erreichen zu können, ist in Weiterbildung der Erfindung vorgesehen, daß das heiße Rohgas vor Eintritt in den Konverter auf eine Gaseintrittstemperatur von ca. 60°C bis 90°C vorgekühlt wird, wobei die Vorkühlung bevorzugt in zwei Stufen erfolgen soll.

Diese Vorkühlung hat über die Vereinfachung des Ausfällens im Konverter hinaus den Vorteil, daß ein Teil der in den Gas/Wasser-Wärmetauschern gewonnenen Wärme dazu herangezogen werden kann, das im Konverter von $SO_2$ befreite und dabei ja unter den Taupunkt abgekühlte Reingas wieder über den Taupunkt zu erwärmen, um auf jeden Fall eine Taupunktsunterschreitung im Kamin und damit einen Ausfall von Wasserdampf und damit die Gefahr eines Versottens des Kamins zu verhindern.

Im allgemeinen läßt sich mit dem erfindungsgemäßen Verfahren eine Entschwefelung des Rauchgases erzielen, die erheblich unter den geforderten Grenzwerten liegt. In diesen Fällen ist es daher zur Wideranwärmung des Reingases auch problemlos möglich, dem aus dem Konverter austretenden Reingas in einem Mischer einen Teil des noch ungereinigten Rohgases beizumischen, wobei dieser Rohgasstrom bevorzugt zwischen den beiden Eingangswärmetauschern vor dem Konverter mit einer Temperatur von etwa 200°C abgezweigt wird. Statt dessen, ggfs. aber auch gleichzeitig damit, könnte, wie bereits weiter oben angedeutet worden ist, die beim Kühlen des Rohgases in einem der Eingangswärmeaustauscher anfallende Wärme in einem weiteren vom Reingas durchsetzten Wärmetauscher zum Aufheizen dieses Reingases, bzw. des Mischstroms aus Reingas und Rohgas, auf eine Temperatur von etwa 100°C ausgenutzt werden.

Der abgezweigte Teilstrom, aus dem in einem Austreiber das Schwefeldioxid mit ausgetrieben werden soll, um bevorzugt in einer nachfolgenden Stufe abgekühlt und verflüssigt zu werden, kann mit besonderem Vorteil in einem Wärmetauscher mit der vom gereinigten Wasser-Teilstrom abgegebenen Wärme vorgeheizt werden, so daß nicht nur im eigentlichen Austreiber nurmehr eine geringe weitere Erhöhung zum Austreiben des $SO_2$ erforderlich ist. Darüber hinaus wird auf diese Art und Weise auch der größte Teil der zum Austreiben eingesetzten Wärme wieder zurückgewonnen und gleichzeitig fällt das wieder dem Hauptstrom zu vermischende Reinwasser nicht mit einer so hohen Temperatur an, daß dann eine entsprechend stärkere Rückkühlung im Kühler vor dem Wiedereinsprühen im Konverter erforderlich ist. In diesem dem Konverter vorgeschalteten Kühler soll der wieder zusammengefügte Wasser-Teilstrom auf eine Sprühtemperatur von etwa 21°C heruntergekühlt werden.

Die erforderliche Restwärme zum Erwärmen des Teilstroms im Austreiber kann in Ausgestaltung der Erfindung vollständig durch einen Teil der in einem der Eingangswärmetauscher gewonnenen Wärme bereitgestellt werden, wobei das Austreiben des $SO_2$ bevorzugt in der Weise geregelt sein soll, daß das ausgetriebene $SO_2$ einen maximalen Wasserdampfgehalt von 10 Gewichtsprozent aufweist, so daß auf diese Weise eine einfache Kühlung und Verflüssigung von reinem $SO_2$ möglich ist.

Zur Durchführung des erfindungsgemäßen Verfahrens eignet sich bevorzugt ein von unten nach oben durchströmter Konverter in Form eines Tanks, wobei über einem im mittleren Teil angeordneten Filterbett die Sprühvorrichtung zum Versprühen des (sauren) Kühlwassers und darüber ein Tropfenabscheider angeordnet ist.

Weitere Vorteile, Merkmale und Einzelheiten der Erfindung ergeben sich aus der nachfolgenden Beschreibung eines Ausführungsbeispiels sowie anhand der schematischen Zeichnung einer erfindungsgemäßen Reinigungsvorrichtung.

Das Rohgas 1 einer Kesselanlage, bzw. Prozeßabgas, wird in zwei Gas/Wasser-Wärmetauschern 2 und 3 auf die zur Entschwefelung erforderliche Temperatur vorgekühlt, wobei es sich dabei um eine Temperatur handelt, die noch oberhalb des Taupunktes des Gases liegt, um ein Ausfallen von Wasserdampf in diesem Stadium zu vermeiden. Das vorgekühlte Gas gelangt über den Einlaß 4 in den unteren Teil eines einen hochgestellten Tank bildenden Konverters 5, der im mittleren Abschnitt ein Filterbett 6 umfaßt, welches von unten nach oben vom zu reinigenden Rauchgas durchsetzt wird, während ihm entgegen über eine Sprühvorrichtung 7 Kühlflüssigkeit gesprüht wird. Durch diese Kühlflüssigkeit wird das wasserdampfhaltige Rauchgas unter den Taupunkt abgekühlt, so daß mit dem Wasserdampf auch das $SO_2$ ausfällt und somit gleichzeitig auch eine Entschwefelung und eine Entfeuchtung stattfindet. Über der Sprühvorrichtung 7 ist ein Tropfenabscheider 8 angeordnet, der verhindert, daß vom aufsteigenden Reingas Wassertröpfchen mitgerissen werden. Damit soll nicht nur einem übermäßigen Wasserverbrauch vorgebeugt werden, sondern auch verhindert werden, daß dieses Wasser im Kamin 9 sich abscheidet und somit zu einem Versotten des Kamins führen könnte. Aus dem gleichen Grund - eine vollständige Entfeuchtung ist ja auch durch die Unterschreitung des Taupunktes nicht erreicht worden - wird das über den Auslaß 10 des Konverters 5 austretende Reingas vor dem Eintritt in dem Kamin 9 auch zunächst wieder auf eine Temperatur von ca. 100°C vorgewärmt, was zum einen dadurch erfolgen kann, daß das im Wärmetauscher 2 erwärmte Wasser einen Wärmetauscher 11 in der Reingasleitung vor dem Kamin durchströmt und die Wärme an das Reingas abgibt, welches dann über ein Gebläse 12 zum Kamin gefördert wird. Darüber hinaus, oder auch statt der genannten Wärmetauscherkopplung, kann vorgesehen sein, daß ein Teilstrom des Rohgases zwischen den beiden Wärmetauschern 2 und 3 als Teilstrom 13 abgezweigt und mit dem Reingasstrom 14 vermischt wird. Dies setzt selbstverständlich voraus - was allerdings in der Praxis fast immer der Fall ist - daß das Reingas beim Austritt aus dem Konverter 5 erheblich geringere Schwefeldioxidkonzentrationen erhält als zulässig, so daß eine gewisse Erhöhung durch das Beimischen des heißen Rohgases ohne weiteres in Kauf genommen werden kann.

Das aus dem Kühlkörperbett 6 nach unten herauslaufende saure Kühlwasser mit einer $SO_2$-Konzentration von ca. 2 bis 3 Prozent und einer Temperatur von ca. 30°C wird über die Leitung 15 abgezogen und in einen größeren Hauptstrom 16 und einen kleineren Teilstrom 17 aufgeteilt. Der Teilstrom 17 wird einem Austreiber 18 zugeführt, in welchem das im Teilstrom enthaltene $SO_2$ durch Erwärmung ausgetrieben wird. Das nur geringe Wasserdampfmengen enthaltende Rein-$SO_2$ wird mit dem Verdichter 19 abgesaugt, verdichtet und im Kühler 20 verflüssigt. Das flüssige $SO_2$ wird über eine Sammelleitung 21 in einem Behälter gesammelt. Der aus dem Austreiber 18 austretende im wesentlichen $SO_2$-freie Teilstrom 22 wird durch einen Wärmetauscher 23 geschickt, in welchem der Teilgasstrom 17 vorerwärmt wird, so daß im eigentlichen Austreiber 18 nurmehr eine relativ geringe Temperaturerhöhung notwendig ist, um das $SO_2$ auszutreiben. Darüber hinaus wird auf diese Weise der Reinwasserstrom 22 gekühlt, so daß er bei der Wiedervermischung mit dem Hauptstrom 16 dessen Temperatur nicht allzu stark erhöht und somit auch im nachgeschalteten Kühler 24, der auf eine Versprühtemperatur von etwa 21°C herunterkühlen soll, nicht zu viel Wärme umgesetzt werden muß. Vom Kühler 24 gelangt dann das leicht saure Kühlwasser wiederum zur Versprüheinrichtung 7.

Der Teilstrom 17 ist dabei so bemessen, daß er gerade so viel $SO_2$ enthält, bzw. gerade so viel $SO_2$ aus ihm im Austreiber 18 ausgetrieben werden kann, wie in einem Durchlauf des Kühlwassers durch den Konverter 5 aus dem zu reinigenden Rauchgas aufgenommen wird, so daß nach der Vermischung des gereinigten Teilstroms 22 mit dem Hauptstrom 16 wieder der gleiche $SO_2$-Gehalt vorliegt wie ursprünglich, d.h. daß über die Sprüheinrichtung 7 jeweils ein saures Kühlwasser

mit einem $SO_2$-Gehalt von etwa 2 bis 3 % versprüht wird. Der Gehalt erhöht sich dabei beim Durchsetzen des Filterbetts und dem Ausfall und Auswaschen des $SO_2$ aus dem Rauchgas maximal um etwa 0,5 %. Um diesen geringen Wert liegt der $SO_2$-Gehalt in der Auslaßleitung 15 höher als in der Eingangsleitung 25 für das Kühlwasser.

Mit der überschüssigen abgegebenen Wärme der Wärmetauscher 2 und 3 wird Wasser erwärmt, beispielsweise als Kesselspeisewasser, Heißwasser, Brauchwarmwasser oder dergl.

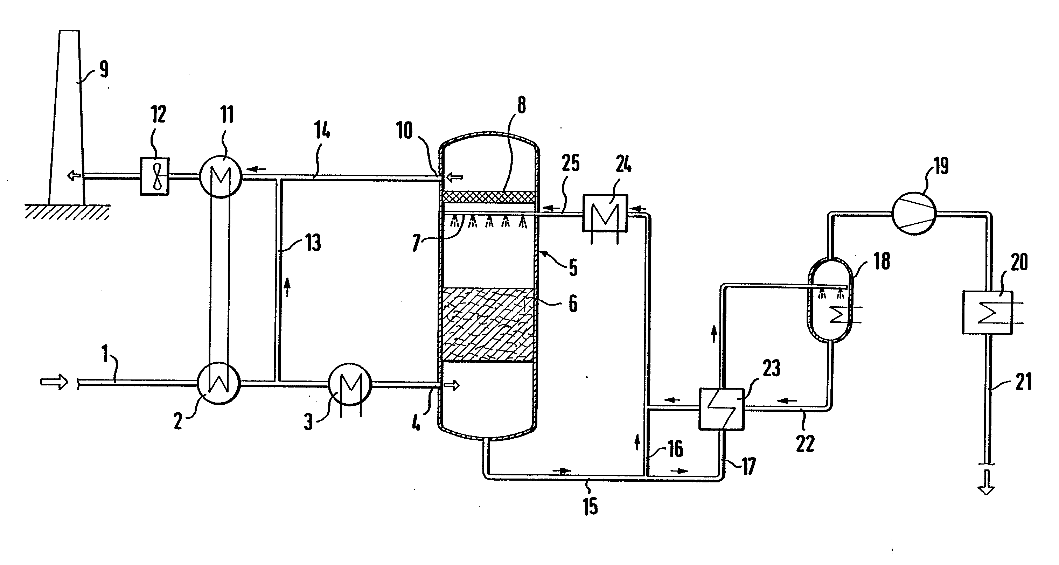

## Ansprüche

1. Verfahren zum Reinigen von - schwefeldioxidhaltigem Rauchgas durch Absorption in Wasser, wobei das wasserdampfhaltige Rauchgas in einem Konverter unter den Taupunkt abgekühlt und das mit dem Wasserdampf ausgefällte im Wasser gelöste Schwefeldioxid als schweflige Säure ausgetragen wird, dadurch gekennzeichnet, daß ein Teilstrom der ausgetragenen schwefligen Säure in einem Austreiber entgast und das $SO_2$ abgezogen und gesammelt wird und daß der Teilstrom nach der Entgasung gekühlt und dem Hauptstrom beigemischt wird, der anschließend als Kühlflüssigkeit in den Konverter zurückgeführt und über einem vom Rauchgas durchsetzten Filterbett versprüht wird.

2. Verfahren nach Anspruch 1, dadurch gekennzeichnet, daß das abgezogene $SO_2$ abgekühlt und verflüssigt wird.

3. Verfahren nach Anspruch 2, dadurch gekennzeichnet, daß die zur Erwärmung im Austreiber benötigte Wärme vollständig durch einen Teil der im Wärmetauscher zurückgewonnen Wärme bereitgestellt wird.

4. Verfahren nach Anspruch 2 oder 3, dadurch gekennzeichnet, daß der aus dem Austreiber freigewordene, im wesentlichen aus $SO_2$ bestehende Gasstrom einen maximalen Wasserdampfgehalt von 10 Gew. % aufweist.

5. Verfahren nach einem der Ansprüche 1 bis 4, dadurch gekennzeichnet, daß das heiße, beispielsweise aus einer Kesselanlage stammende Rohgas bzw. Prozeßgas vor Eintritt in den Konverter vorzugsweise in zwei Stufen von Gas/Wasser-Wärmetauschern auf eine Gaseintrittstemperatur von etwa 60 bis 90°C vorgekühlt wird.

6. Verfahren nach einem der Ansprüche 1 bis 5, dadurch gekennzeichnet, daß das im Konverter von $SO_2$ befreite Reingas durch das Rohgas wieder über den Taupunkt erwärmt wird.

7. Verfahren nach Anspruch 6, dadurch gekennzeichnet, daß dem aus dem Konverter austretenden Reingas in einem Mischer ein Teilstrom des Rohgases beigemischt wird.

8. Verfahren nach Anspruch 7, dadurch gekennzeichnet, daß der Teilstrom zwischen den beiden Wärmetauschern abgezweigt wird.

9. Verfahren nach einem der Ansprüche 6 bis 8, dadurch gekennzeichnet, daß die beim Kühlen des Rohgases im Wärmetauscher (2) anfallende Wärme in einem Wärmetauscher (11) zum Aufheizen des Mischstromes auf eine Temperatur von etwa 100°C ausgenutzt wird.

10. Verfahren nach einem der Ansprüche 1 bis 9, dadurch gekennzeichnet, daß der Teilstrom in einem Wärmetauscher mit der vom gereinigten Wasser-Teilstrom abgegebenen Wärme vorgeheizt wird.

11. Verfahren nach einem der Ansprüche 1 bis 10, dadurch gekennzeichnet, daß der sich aus dem Wasser-Teilstrom, der gereinigt und im Wärmetauscher heruntergekühlt ist, und dem Restwasserstrom zusammensetzende Wasser-Hauptstrom in einem Kühler auf eine Sprühtemperatur von etwa 21°C gekühlt wird.

12. Verfahren nach einem der Ansprüche 1 bis 11, dadurch gekennzeichnet, daß das $SO_2$-Gas bei Bedarf vor der Verflüssigung entwässert und gereinigt wird.

13. Vorrichtung zur Durchführung des Verfahrens nach einem der Ansprüche 1 bis 12, gekennzeichnet durch einen vom zu reinigenden Rohgas (1) von unten nach oben durchströmten tankförmigen Konverter (5) mit einem über einem Filterbett (6) angeordneten Kühlmittelsprühvorrichtung (7) und einem darüber angeordneten Tropfenabscheider (8) sowie einem obenliegenden Reingasauslaß (10) und einem untenliegenden Kühlmittelauslaß (15).

0 264 580

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CHEMIE, INGENIEUR, TECHNIK, Band 37, Nr. 11, 1965, Seiten 1136-1139, Weinheim; P. GERMERDONK "Auswaschen von Schwefeldioxyd aus Rauchgasen" * vollständiges Dokument * --- | 1,5,6, 11,13 | B 01 D 53/34 |
| A | US-A-4 110 087 (J.P. NOLLEY) * Anspruch 1 * --- | 1 | |
| A | US-A-4 189 309 (J.A. HOEKSTRA) * Ansprüche 1, 5; Figur 3 * --- | 1,5,6 | |
| A | DE-A-2 125 624 (E. BOLMERG) * Ansprüche 1, 2 * --- | | |
| A | US-A-3 985 529 (S.A. PETERSON) * Ansprüche 1-4 * ----- | 1,2,4, 12 | |

RECHERCHIERTE
SACHGEBIETE (Int. Cl.4)

B 01 D 53/00

Der vorliegende Recherchenbericht wurde für alle Patentansprüche erstellt

| Recherchenort | Abschlußdatum der Recherche | Prüfer |
|---|---|---|
| BERLIN | 30-12-1987 | BERTRAM H E H |